# EUROPÄISCHE PATENTSCHRIFT

(11) **EP 2 160 528 B1**
(45) Veröffentlichungstag und Bekanntmachung des Hinweises auf die Patenterteilung: **15.09.2010**
(21) Anmeldenummer: 09765543.5
(22) Anmeldetag: 05.06.2009
(51) Int. Cl.: F16H 59/10, F16H 63/48

(54) **WÄHLHEBELANORDNUNG FÜR EIN AUTOMATIKGETRIEBE**
SELECTOR-LEVER ARRANGEMENT FOR AN AUTOMATIC GEARBOX
DISPOSITIF A LEVIER SELECTEUR POUR BOITE DE VITESSES AUTOMATIQUE

(30) Priorität: 18.06.2008 DE 102008028614
(43) Veröffentlichungstag der Anmeldung: 10.03.2010
(73) Patentinhaber: ECS Engineered Control Systems AG, 9015 St. Gallen (CH)
(72) Erfinder: BREUNIG, Petra, 97647 Nordheim v. d. Rhön (DE); SCHIRMER, Heiko, 21649 Regesbostel (DE)
(74) Vertreter: Müller, Eckhard
(86) Internationale Anmeldenummer: PCT/EP2009/004032
(87) Internationale Veröffentlichungsnummer: WO 2009/152963

(56) Entgegenhaltungen:
- EP-B1- 1 639 277
- DE-A1- 10 109 960
- DE-B4- 10 326 118
- JP-A- 2000 289 482

## Beschreibung

### Technisches Gebiet

Die Erfindung betrifft eine Wählhebelanordnung für ein Automatikgetriebe eines Kraftfahrzeuges. Erfindungsgemäße automatische Getriebe können klassische Automatikgetriebe mit Drehmomentwandler sein oder Doppelkupplungsgetriebe oder auch stufenlose Getriebe oder sonstige automatisch gesteuerte Getriebeanordnungen.

Dabei sind sogenannte Shift-by-Wire-Systeme etabliert, welche die zu wählende Schaltstufe elektrisch oder elektronisch an eine Getriebesteuerung des Getriebes weiterleiten. Eine mechanische Verbindung zwischen Wählhebel und Getriebe bzw. Getriebesteuerung ist dann nicht mehr unbedingt erforderlich.

Mit Hilfe einer solchen Wählhebelanordnung werden der Fahrmodus und/oder die Fahrstufe gewählt. Als Fahrmodus kommt dabei beispielsweise ein Fahrbetrieb (D), ein Rückwärtsfahrbetrieb (R), eine Neutralstellung (N) sowie eine Parkstellung (P), in welcher das Getriebe gesperrt ist, in Frage.

Des Weiteren gibt es häufig optional wählbare Sonderfahrprogramme, beispielsweise einen Sportmodus (S) sowie einen manuellen Modus (M). In aller Regel sind die Fahrstufen in einer linearen oder abgestuften Schaltgasse angeordnet, wobei die manuellen Schaltfunktionen der Fahrstufe M in einer im Wesentlichen parallel zu erstgenannter Schaltgasse ausgebildeten Gasse angeordnet sind oder in einer Schaltgasse, die im Wesentlichen senkrecht zur ersten Schaltgasse steht.

### Stand der Technik

Wählhebelanordnungen für ein Automatikgetriebe der vorgenannten Art sind im Stand der Technik bekannt.

Aus Sicherheitsgründen ist bei Shift-by-wire-Systemen erwünscht, dass das Einlegen der Parkstellung P und damit eine mechanische Blockierung des Getriebes über eine mechanische Kopplung vorgenommen wird, um selbst bei Fehlfunktionen des Getriebes oder der Getriebesteuerung eine zuverlässige Blockierung des Getriebes sicherzustellen, sodass das Fahrzeug nicht unkontrolliert wegrollen kann. Bei sämtlichen übrigen Fahrprogrammen, R, N, D, S, M erfolgt die Übertragung der Wählhebelposition an eine Getriebesteuerung elektronisch, wobei die Getriebesteuerung die Schaltvorgänge vornimmt.

Aus der gattungsgemäßen DE 103 26 118 B4 geht eine Schaltvorrichtung zur mechanisch kopplungsfreien Übertragung von Schaltbefehlen an ein automatisches Kraftfahrzeuggetriebe hervor, bei welchem eine Mehrgelenkverbindung in der mechanischen Kopplung vorgesehen ist, die eine Gelenkachse aufweist, welche entlang einer Kulissenkontur verläuft. Die Mehrgelenkverbindung wird dann beim Betätigen des Wählhebels in einer Parksperrenposition oder in eine Lösungsposition durch die Kulissenkontur geführt.

Nachteilig bei dieser bekannten Schaltvorrichtung ist jedoch, dass aufgrund der Mehrgelenkverbindung eine Vielzahl von Komponenten vorgesehen werden muss, was den Konstruktionsaufwand, das Gewicht und den Preis der Schaltvorrichtung negativ beeinflusst. Darüber hinaus wirkt sich die Mehrgelenkverbindung negativ auf den Schaltkomfort aus, da die in einer Kulissenkontur geführte Gelenkachse Spiel aufweisen kann, was zu einem undefinierten Schaltgefühl führt. Weiterhin können die Gelenke schwergängig werden, was die notwendigen Betätigungskräfte erhöht. Schließlich ist der Wartungsaufwand einer derart gestalteten Mehrfachgelenkverbindung erhöht, da die Gelenkteile der Mehrfachgelenkverbindung von Zeit zu Zeit geschmiert werden müssen.

Eine weitere bekannte Wählhebelanordnung für ein Automatikgetriebe ist in der DE 101 25 526 A1 offenbart, in welcher ein Seilhebel zwischen zwei Stellungen schwenkbar ist, denen jeweils eine Stellung des Wählhebels zugeordnet ist. An Wählhebel und Seilhebel sind Koppelglieder vorgesehen, die zueinander komplementär sind. Dabei ist es erforderlich, den Wählhebel zur Außereingriffbringung mit dem Seilhebel in einer Richtung axial zur Schwenkrichtung zu drücken.

Diese Vorrichtung erfordert eine zusätzliche axiale Verschiebbarkeit des Wählhebels und zusätzliche, zum Beispiel federbelastete Elemente, damit der Wählhebel in eine Ausgangsstellung in axialer Richtung zurückkehrt.

Aus der EP 1639277 B1 ist eine Anordnung zur Steuerung von Schaltpositionen in einem Pkw bekannt, die eine Konsole mit einer Wand und mehreren Sensoren aufweist. Auch ist ein Schalthebel vorgesehen, der sich in einer ersten und zweiten Hauptrichtung, die im Wesentlichen senkrecht zueinander liegen, zurück und vor bewegen kann. Eine Codierungsvorrichtung kann mit den Sensoren in Wechselwirkung treten, wobei die Codierungsvorrichtung mit dem Schalthebel verbunden ist. Die Codierungsvorrichtung ist benachbart des Schalthebels schwenkbar befestigt, wobei die Anordnung weiterer Mittel zur Vorspannung der Codierungsvorrichtung in Richtung der Konsolenwand aufweist. Diese Shift-by-Wire-Schaltvorrichtung für Fahrzeuggetriebe weist einen Nockenmechanismus auf, der eine Wählbewegung erzeugt. Der Nockenmechanismus besteht aus einer drehfest mit einem Schalthebel verbundenen Kurvenscheibe, an deren Umfang eine Nockenkontur ausgebildet ist. Ein Schwenkhebel umgreift diese Kontur und weist einen Nockenmitnehmer auf, der von der Nockenkontur mitnehmbar ist, wenn der Schalthebel betätigt wird.

### Aufgabe

Aufgabe der Erfindung ist es daher, eine Schaltvorrichtung der eingangs genannten Art dahingehend zu verbessern, dass bei verbessertem Schaltkomfort eine kostengünstigere und mechanisch einfachere Variante zur Verwirklichung einer mechanischen Anbindung des Wählhebels beim Schalten in bzw. aus einer Parkposition heraus zu gewährleisten.

### Darstellung der Erfindung

Die Erfindung wird gelöst durch eine Wählhebelanordnung gemäß Anspruch 1.

Eine erfindungsgemäße Wählhebelanordnung für ein Automatikgetriebe weist einen in der Wählhebelanordnung schwenkbar gelagerten Wählhebel auf, mit Hilfe dessen verschiedene vorgesehene Fahrprogramme wählbar sind, beispielsweise Vorwärtsfahren mit automatischer Getriebesteuerung (D), Rückwärtsfahren (R), eine Fahrstufe, in der der Kraftfluss zwischen Motor und Antriebsrädern unterbrochen ist (Neutral; N) sowie eine Parkstellung (P), in welcher das Fahrzeug am Wegrollen gehindert ist. Bekannt zur Verwirklichung einer Parkposition sind Vorrichtungen, die die Getriebeausgangswelle blockieren.

Weitere Schaltprogramme, beispielsweise ein Sportprogramm (S) oder ein manuelles Schaltprogramm (M) sind ebenfalls denkbar. Derartige manuelle Schaltprogramme, in denen ein Benutzer einen einzulegenden Gang selbst vorwählt, können beispielsweise in einer separaten Schaltgasse vorgesehen sein, welche parallel zu einer Schaltgasse angeordnet ist, in welcher die normalen Getriebestufen R, N, D usw. hintereinander liegen. Weiterhin ist es möglich, die manuellen Schaltbefehle im Wesentlichen quer zur ersten Schaltgasse, beispielsweise auf der Stufe D anzuordnen. Darüber hinaus ist eine Wählhebelpositionserkennungseinrichtung vorgesehen, die die aktuelle Position des Wählhebels erkennt und an eine Getriebesteuerung weiterleitet. Diese Erkennungseinrichtung ist im Wesentlichen eine Positionserkennungseinrichtung und kann dabei im Rahmen der Erfindung, beispielsweise als Drehwinkelsensor, als Magnet-Sensor-Anordnung oder als Positionsschalter ausgeführt sein. Weiterhin ist ein Seilzughebel vorgesehen, an dem ein mit dem Getriebe verbindbarer Seilzug festlegbar ist. Mit Hilfe des Seilzughebels wird eine mechanische Verbindung zwischen Wählhebel und Getriebe geschaffen, durch die bei der Einlegung der Parkposition (P) mittels des Wählhebels das Getriebe sperrbar ist. Im Rahmen der Erfindung können auch andere mechanische Kopplungen vorgesehen sein, so zum Beispiel ein Gestänge. Darüber hinaus kann im Rahmen der Erfindung auch eine mechanische Kopplung mit anderen Sperrvorrichtungen vorgesehen sein, die beim Schalten des Wählhebels in Parkposition (P) ein Wegrollen des Fahrzeuges verhindern, beispielsweise durch ein Zusammenwirken mit außerhalb des Getriebes angeordneten Blockiervorrichtungen im Antriebsstrang oder dergleichen. Mit Hilfe einer derartigen mechanischen Kopplung zwischen Wählhebel und Getriebe bzw. allgemeiner Antriebsstrang kann ein Wegrollen des Fahrzeuges selbst bei Defekten oder Fehlfunktionen in der Getriebesteuerung gewährleistet werden. Erfindungsgemäß ist vorgesehen, dass auf der Hebelachse des Wählhebels und in drehfester Verbindung mit diesem eine Kurvenscheibe angeordnet ist, die sich zusammen mit dem Wählhebel um die Hebelachse dreht. Am Umfang der Kurvenscheibe ist wenigstens eine Nocke ausgebildet, also ein Vorsprung bzw. ein Bereich mit vergrößertem Radius gegenüber einem anderen Bereich. Die Nocke der Kurvenscheibe dreht sich somit mit der Kurvenscheibe. Der Seilzughebel umgreift die Kurvenscheibe zumindest abschnittsweise, wobei der Seilzughebel wenigstens einen Vorsprung aufweist, welcher mit der Nocke der Kurvenscheibe zusammenwirkt. Die Anordnung von Vorsprung und Nocke ist dergestalt, dass beim Betätigen des Wählhebels in eine Parkposition (P) der Seilzughebel betätigt wird. Durch das Betätigen des Seilzughebels wird ein daran im montierten Zustand angeordneter Seilzug ebenfalls betätigt und kann eine Blockierung des Getriebes bzw. des Antriebsstranges bewirken. Die erfindungsgemäße Wählhebelanordnung ist gegenüber dem aus dem Stand der Technik bekannten Wählhebelanordnungen besonders einfach konstruiert und benötigt weniger Bauteile. Es hat sich darüber hinaus überraschenderweise gezeigt, dass durch die Verwendung einer Kurvenscheibe, die mit einem Vorsprung des Seilzughebels zusammenwirkt, eine nahezu spielfreie und zuverlässige Betätigung des Wählhebels möglich ist, die aufgrund einer geringen Zahl benötigter Bauteile besonders zuverlässig funktioniert und die darüber hinaus kostengünstig herstellbar ist. Die Kurvenscheibe, die mit einem Vorsprung des Seilzughebels zusammenwirkt, ermöglicht eine Betätigung des Seilzughebels ausschließlich dann, wenn der Wählhebel in Parkposition (P) betätigt wird. Bei allen übrigen Betätigungen des Wählhebels behält der Seilzughebel seine Position bei, wodurch eine damit in Verbindung stehende Getriebesperre nicht betätigt wird. Weiterhin ist eine weitere entsprechende Kombination von Kurvenscheibennocke und Seilzughebelvorsprung vorgesehen, mit Hilfe derer der Seilzughebel beim Betätigen des Wählhebels von einer Parkposition heraus in eine sonstige Fahrposition, beispielsweise Rückwärts, Neutral, Vorwärts oder Manuell derart betätigt, dass die Getriebesperre aufgehoben wird. An der Kurvenscheibe sind zwei Nocken ausgebildet sind, die auf gegenüberliegenden Seiten der Kurvenscheibe angeordnet sind. Mit Hilfe einer zweiten Nocke und einem zweiten Vorsprung zum Betätigen des Seilzughebels von einer Parkposition in eine Fahrposition, also zum Entsperren des Getriebes, können auf andere Mittel zum Entsperren des Getriebes verzichtet werden und eine Sperrung bzw. Entsperrung des Getriebes kann ausschließlich über die Kombination von Seilzughebel mit Vorsprüngen und Kurvenscheibe mit Nocken bewerkstelligt werden. Darüber hinaus lassen sich mit Hilfe einer derartigen zweinockigen Kurvenscheibe und einem Seilzug hebel mit zwei Vorsprüngen eine Fehlbetätigung und ein versehentliches Lösen der Getriebesperre verhindern.

Eine erste vorteilhafte Anordnung des Seilzughebels sieht vor, dass dieser um eine Schwenkachse schwenkbar an der Wählhebelanordnung angeordnet ist. Der Seilzughebel kann dazu beispielsweise an einem Gehäuse der Wählhebelanordnung drehbar gelagert sein, wobei zum Betätigen eines daran anschließbaren Seilzuges von einer Fahrposition in eine Parkposition bzw. umgekehrt der Seilzughebel um die Lagerung gedreht wird, wodurch eine Anlenkung des Seilzuges verschwenkt wird.

Diese Art der Aufhängung des Seilzughebels an der Wählhebelanordnung ermöglicht eine leichte und reibungsarme Betätigung des Seilzughebels und erlaubt darüber hinaus einen besonders kompakten Aufbau der Vorrichtung, da eine notwendige Betätigungsstrecke zum Überführen der Getriebesperre von einer Sperrposition in eine Löseposition durch die Länge des Hebels bestimmt werden kann. So sind üblicherweise etwa 15 mm Betätigungshub des Seilzughebels erforderlich, wobei bei Wählhebelanordnungen ein Verschwenkbereich zwischen Parkposition und erster Nicht-Parkposition, meist Rückwärtsfahren (R), etwa 5 bis 10° beträgt. Um diese geringe Verdrehung in einen ausreichenden Hub umzusetzen, reicht nach dieser Ausgestaltung eine relativ kleine Kurvenscheibe, die relativ nah an der Schwenkachse des Seilzughebels angeordnet ist, wobei der Seilzughebel seinerseits darüber hinaus ausreichend lang ist, um den benötigten Betätigungshub bereitzustellen.

Bevorzugt ist vorgesehen, dass der Seilzughebel die Kurvenscheibe mit einer Ausnehmung ringartig umgreift. Der Seilzughebel weist in diesem Fall ein Loch bzw. einen offenen Bereich auf, in dessen Inneren die Kurvenscheibe angeordnet ist. Am Innenrand des Lochs bzw. der Ausnehmung sind ein bzw. zwei Vorsprünge ausgebildet, welche mit den oder dem Nocken der Kurvenscheibe zusammenwirken können. Die Vorsprünge sind somit bevorzugt als Innenkontur der Ausnehmung ausgebildet.

Alternativ zu einer dreh- bzw. schwenkbaren Lagerung des Seilzughebels ist eine Linearführung oder eine Kurvenführung des Seilzughebels denkbar. Dabei wird der Seilzughebel nockenbetätigt entlang einer geraden oder gebogenen Führung verschoben, wodurch ein daran angeschlossener Seilzug betätigbar ist. Linearführungen werden bevorzugt dann eingesetzt, wenn der zur Verfügung stehende Bauraum für die Wählhebelanordnung insbesondere in die Tiefe (Z) vergleichsweise klein ist.

Der Seilzughebel kann hierbei die Kurvenscheibe, wie im Falle eines schwenkbaren Seilzughebels vollständig umgreifen, oder aber mit Vorteil als Gabel ausgebildet sein, wodurch sich das Gewicht des Seilzughebels reduzieren lässt. Die Vorsprünge bei der geführten Seilzughebelvariante sind im Wesentlichen senkrecht zur Betätigungsrichtung des Seilzughebels angeordnet, wodurch sich der Betätigungshub des Seilzughebels sowie der Wirkungsgrad der Betätigung optimieren lassen.

Besonders vorteilhaft ist es, wenn die Kurvenscheibe eine derartige Kontur aufweist, dass der oder die Vorsprünge des Seilzughebels in sämtlichen möglichen Stellungen des Wählhebels stets an der Kurvenscheibe anliegen. Mit Hilfe einer derartigen Ausbildung der Kurvenscheibe wird gewährleistet, dass der Seilzughebel nicht ungewollt in eine andere Position gelangen kann, was durch Vibrationen im Fahrzeug oder dergleichen ausgelöst werden könnte. Der Seilzughebel ist dann stets zwangsweise festgelegt auf seine jeweilige Position.

Bevorzugt ist dazu vorgesehen, dass die Betätigungsnocke zum Betätigen des Seilzughebels aus der Parkposition in einer Drehrichtung zum Betätigen in eine Fahrposition (R, N, D, S, M) im Umfang nach hinten derart verlängert ist, dass sie einen im Wesentlichen gleichbleibenden Umfangsradius zur Achse der Kurvenscheibe aufweist. Auf der gegenüberliegenden Seite ist im Anlagebereich des dortigen Vorsprungs ein dementsprechend kleinerer Radius an der Kurvenscheibe ausgebildet, sodass der zweite Vorsprung ebenfalls stets an der Kurvenscheibe anliegt, wenn der Wählhebel gedreht wird.

Die Kurvenscheibe bildet so bevorzugt eine Kontur mit einem stets gleichbleibenden Durchmesser, welcher der Summe des kleineren Radius und des größeren Radius entspricht, wobei im Bereich der jeweiligen Nocken jeweils ein Übergang von kleinerem auf den größeren Radius bzw. umgekehrt stattfindet. Der Durchmesser entspricht vorteilhafterweise etwa dem Abstand der beiden Vorsprünge des Seilzughebels voneinander. Beim Betätigen des Wählhebels in die Parkposition ist bei einer Zweinockenanordnung mit Vorteil vorgesehen, dass die Radien beim Umschalten zwischen Sperren und Entsperren des Getriebes gerade wechseln, sodass der Vorsprung des Seilzughebels, der zum Betätigen in Parkposition in Eingriff gelangt, auf einem größeren Radius geführt wird und der Vorsprung auf dem gegenüberliegenden Betätigungsnocken zum Lösen der Parkposition auf einem kleineren Radius.

Mit Hilfe der zwei unterschiedlichen Radien der Kurvenscheibe lässt sich somit eine zwangsweise Positionierung des Seilzughebels in einer Fahrstellung, also bei nicht aktivierter Getriebesperre erreichen.

Ein weiterer Vorteil ergibt sich, wenn beiderseits der Hebelachse eine Kurvenscheibe angeordnet ist, wodurch sich ein zuverlässigerer Betrieb erreichen lässt, da ein Verkippen des Wählhebels nicht mehr möglich ist. Damit wird einem Kippen der beweglichen Teile der Wählhebelanordnung entgegengewirkt.

Weitere Ziele, Merkmale sowie vorteilhafte Anwendungsmöglichkeiten der Erfindung ergeben sich aus der nachfolgenden Beschreibung eines Ausführungsbeispiels anhand der Zeichnungen. Dabei bilden sämtliche beschriebenen und/oder bildlich dargestellten Merkmale in ihrer sinnvollen Kombination den Gegenstand der vorliegenden Erfindung, auch unabhängig von den Patentansprüchen und deren Rückbezügen.

### Kurzbeschreibung der Figuren

Es zeigen schematisch:
- Fig. 1: eine erfindungsgemäße Wählhebelanordnung in einer Seitenansicht mit einem Wählhebel in einer ersten Fahrposition (S);
- Fig. 2: die Wählhebelanordnung aus Fig. 1 mit dem Wählhebel in einer zweiten Fahrposition (R) sowie
- Fig. 3: die Wählhebelanordnung aus Fig. 1 mit einem Wählhebel in Parkposition (P).

### Ausführungsbeispiel

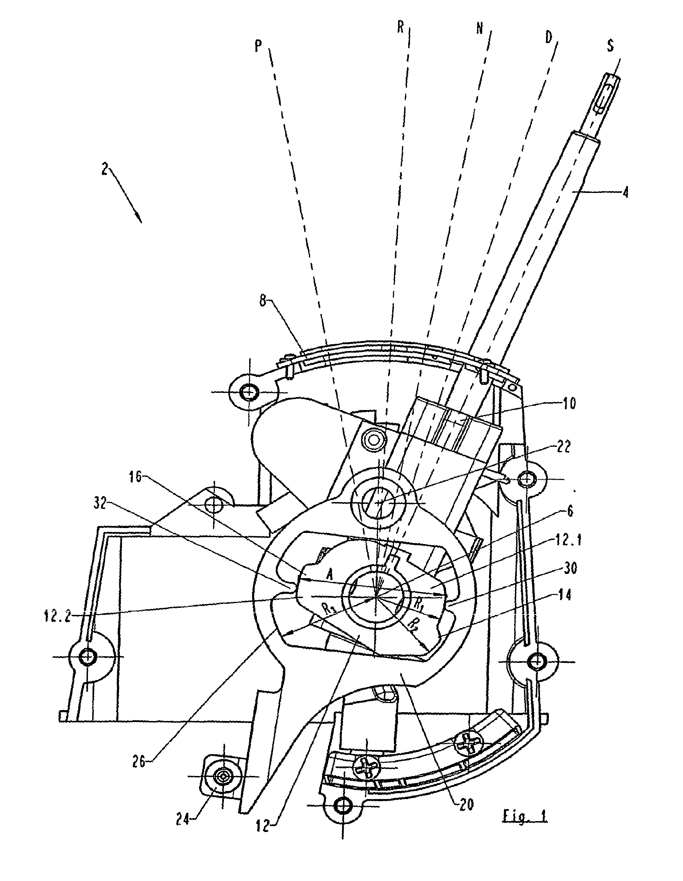

Fig. 1 zeigt eine erfindungsgemäße Wählhebelanordnung 2.

Die Wählhebelanordnung 2 weist einen Wählhebel 4 auf, der schwenkbar um eine Wählhebelachse 6 gelagert ist. Die Hebelachse 6 ist dabei gehäusefest zur Wählhebelanordnung 2. Die Lagerung kann an einem nicht dargestellten Gehäuse der Wählhebelanordnung 2 angeordnet sein oder an einem Innenkörper der Wählhebelanordnung 2.

Der Wählhebel 4 ist einer Schaltkulisse 8 geführt und kann manuell in verschiedene Positionen betätigt werden, die durch gestrichelte Linien in Fig. 1 dargestellt sind, so zum Beispiel S (Sport), D (Fahren), N (Neutral; ausgekuppelt), R (Rückwärts) sowie P (Parken). Darüber hinaus kann eine zweite Schaltgasse vorgesehen sein, in der ein manueller Schaltbetrieb (M) verwirklicht ist. Diese zweite Schaltgasse liegt im Wesentlichen parallel zur ersten Schaltgasse 8 und ist daher in den Figuren nicht zu erkennen. Die zweite Schaltgasse kann durch Kippen des Wählhebels 4 in die Bildebene hinein aus der Position D erreicht werden. Durch Kippen bzw. Antippen des Wählhebels 4 nach vorne oder hinten können Schaltbefehle vorgesehen werden. Der Wählhebel 4 kann federbelastet sein, um in der manuellen Schaltgasse nach einem Schaltbefehl in eine Ausgangsstellung zurückzukehren.

Die Wählhebelanordnung 2 übermittelt die Wählhebelposition des Wählhebels 4 an eine Getriebesteuerung. Hierzu ist eine Positionserfassung vorgesehen, die mittels eines Sensorgebers 10 sowie eines nicht dargestellten Sensorempfängers die Position des Wählhebels 4 erfasst. Als Sensorgeber kann beispielsweise ein Magnet 10 vorgesehen sein, wobei als Sensorempfänger ein oder mehrere nicht dargestellte an dem Gehäuse der Wählhebelanordnung angebrachten Magnetfeldsensoren, beispielsweise Hall-Sensoren, angeordnet sind, die die Stärke des von dem Magneten 10 erzeugten Magnetfeldes erfassen und dadurch Rückschlüsse auf die Position des Wählhebels 4 schließen. Andere Sensoranordnungen sind genauso möglich, beispielsweise solche, die in der Schwenkachse 6 des Wählhebels 4 angeordnet sind und einen Schwenkwinkel des Wählhebels 4 erfassen.

Drehfest mit dem Wählhebel 4 ist auf der Hebelachse 6 eine Kurvenscheibe 12 angeordnet, die beim Verschwenken des Wählhebels 4 entsprechend um die Hebelachse 6 gedreht wird. Die Kurvenscheibe 12 weist zwei Nocken 14, 16 auf. Die Nocken 14, 16 werden gebildet durch einen Übergang eines Kurvenradius R₁ auf einen demgegenüber größeren Radius R₂. Im dargestellten Ausführungsbeispiel sind jeweils die Bereiche mit größerem Radius R₂ in einem unteren Bereich der Kurvenscheibe 12 angeordnet, wohingegen die Bereiche mit dem kleineren Radius R₁ im oberen Bereich angeordnet sind. Der Übergang zwischen kleinem Radius R₁ zu größerem Radius R₂ ist kontinuierlich gestaltet, wodurch sich eine Nockenkontur entlang der Kurvenscheibe 12 ergibt.

Die Wählhebelanordnung 2 weist weiterhin einen Seilzughebel 20 auf, der um eine gehäusefeste Schwenkachse 22 drehbar in der Wählhebelanordnung 2 gelagert ist. Der Seilzughebel 20 weist eine Anbindung 24 an einen daran anzubringenden Seilzug auf, die in dem dargestellten Ausführungsbeispiel als Bohrung ausgebildet ist, in welche ein Kugelbolzen eingenietet ist, an dem wiederum eine Endarmatur des Seilzuges aufsteckbar ist.

Der Seilzughebel 20 weist darüber hinaus eine Ausnehmung 26 auf, die die Kurvenscheibe 12 vollständig umgreift. Die Ausnehmung 26 ist in den Seitenbereichen kreisförmig mit einem Radius R₃ ausgestaltet und im oberen sowie unteren Bereich abgeflacht, um den erforderlichen Bauraum für die Ausnehmung gering zu halten. Entlang der Innenkontur der Ausnehmung sind zwei Vorsprünge 30, 32 vorgesehen, die in die Ausnehmung 26 hineinragen. Die Vorsprünge 30, 32 weisen dabei zueinander einen Abstand A auf, welcher im Wesentlichen der Summe von R₁ und R₂ entspricht, wobei A geringfügig größer sein kann, um gewisse Toleranzen auszugleichen.

Auf dem in Fig. 1 nicht sichtbaren rückwärtigen Teil der Wählhebelanordnung 2 ist der zuvor beschriebene Aufbau ebenfalls vorhanden, um eine größere Verkippsicherheit des Seilzughebels 20 zu erreichen. Der Seilzughebel 20 ist dabei in einer Ansicht senkrecht von links oder rechts zur Ansicht aus Fig. 1 gabelartig ausgebildet mit zwei symmetrischen Ausnehmungen 26.

Der Seilzughebel 20 befindet sich in Fig. 1 in nach links verschwenkter Position, welche einer Gelöststellung des Getriebes entspricht, in der eine Getriebeblockieranordnung nicht betätigt ist und sich das Getriebe frei drehen kann. Zwischen dem Nocken 14 und dem Vorsprung 30 befindet sich ein Abschnitt konstanten Radius R₁. Der Vorsprung 32 ist auf der Oberfläche des Nockens 16 mit Radius R₂ geführt.

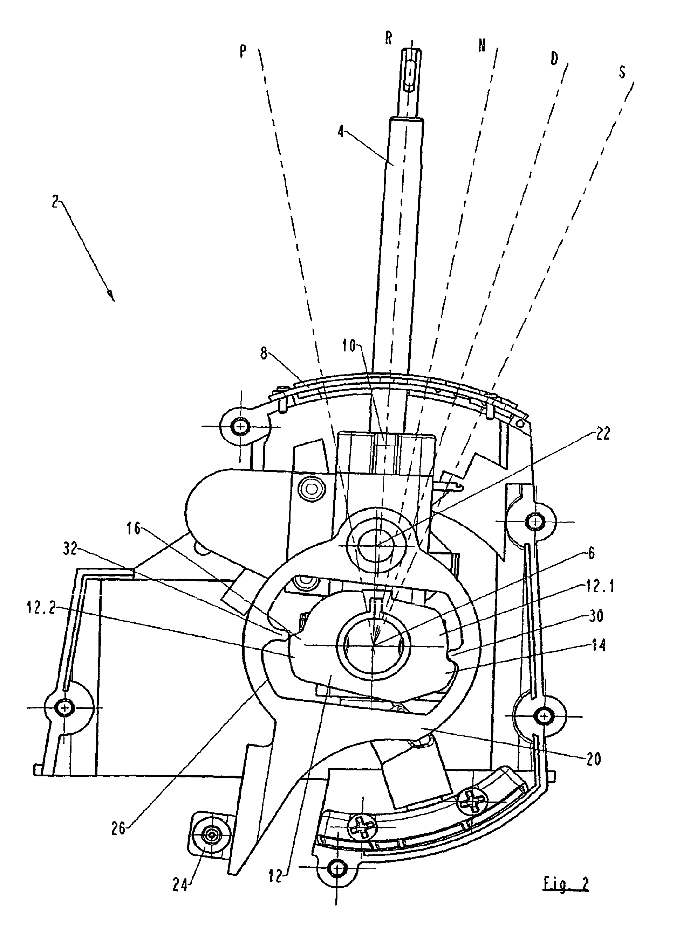

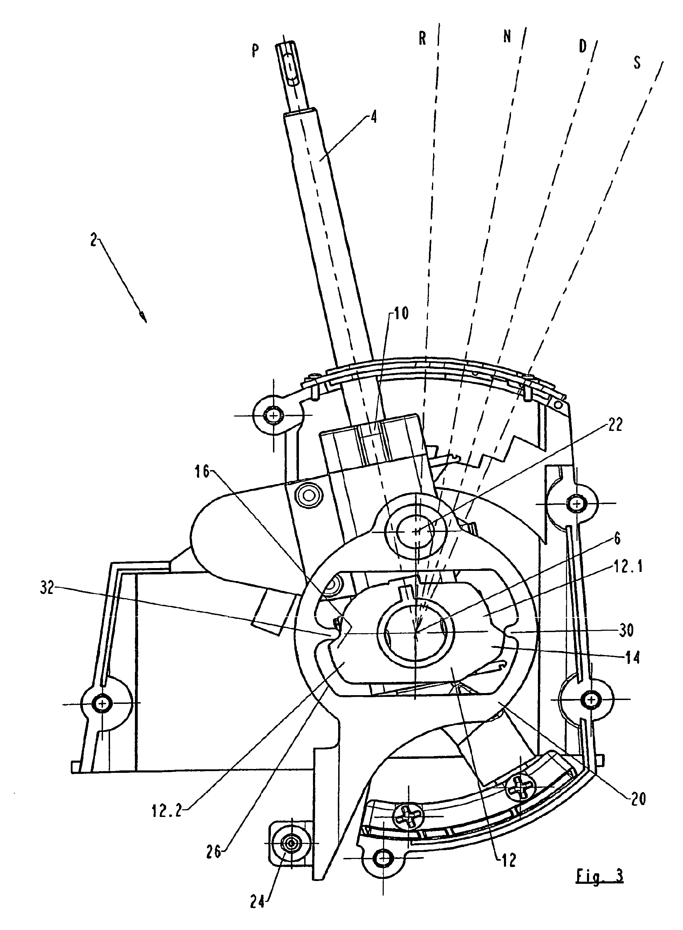

Die Figuren 2 und 3 dienen zur Verdeutlichung des Funktionsprinzips der erfindungsgemäßen Wählhebelanordnung 2 in verschiedenen Schaltstufen.

Gemäß Fig. 2 befindet sich der Wählhebel in der Rückwärtsfahrposition R, die im gewählten Ausführungsbeispiel benachbart zur Parkposition P angeordnet ist.

Beim Betätigen des Wählhebels 4 von der Schaltposition S gemäß Fig. 1 oder einer anderen Schaltposition N bzw. D in die Position P wird die Kurvenscheibe 12 zusammen mit dem Wählhebel gedreht, was bedingt, dass der Vorsprung 30 auf einem Abschnitt 12.1 mit Radius R₁ gleitet, bis der Übergangsbereich zum Nocken 14 bei Schaltstufe R in Anlage mit dem Vorsprung 30 gelangt.

Der gegenüberliegend angeordnete Vorsprung 32 gleitet indes auf einem Abschnitt 12.2 mit Radius R₂. Währenddessen bleibt der Seilzughebel 20 unbetätigt. Beim Übergang von der Schaltposition R in die Schaltposition P, also die Parkposition, wirkt der Nocken 14 als Mitnehmer für den Vorsprung 30, wodurch der Seilzughebel 20 in der Darstellung nach rechts verschwenkt wird. Hierdurch wird der an der Anbindung 24 angebrachte Seilzug betätigt und das Getriebe blockiert (Fig. 3).

Beim Betätigen des Wählhebels 4 aus Position P heraus in eine Fahrposition, beispielsweise R, wirkt dann der Nocken 16 als Mitnehmer für den Vorsprung 32, wodurch der Seilzughebel 20 nach links verschwenkt wird und das Getriebe wieder freigegeben wird.

Mit Hilfe der Erfindung wird auf besonders einfache Weise erreicht, dass eine Betätigung des Seilzughebels 20 nur dann stattfindet, wenn der Wählhebel in die Parkposition P hinein oder aus der Parkposition P wieder heraus betätigt wird. Bei sämtlichen sonstigen Betätigungen des Wählhebels 4 gleiten die Vorsprünge 30, 32 des Seilzughebels 20 auf Abschnitten 12.1, 12.2 der Kurvenscheibe 12 mit jeweils gleichem Radius R₁ bzw. R₂, sodass der Seilzughebel 20 nicht betätigt wird.

Dadurch, dass die Vorsprünge 30, 32 stets auf der Kurvenscheibe 12 gleiten, wird der Seilzughebel 20 in der entsprechenden Position stets gesperrt, sodass eine unbeabsichtigte Betätigung des Seilzughebels 20 nicht möglich ist.

### Bezugszeichenliste

- 2: Wählhebelanordnung
- 4: Wählhebel
- 6: Hebelachse
- 8: Schaltkulisse
- 10: Sensorgeber
- 12: Kurvenscheibe
- 12.1: Abschnitt mit Radius R₁
- 12.1: Abschnitt mit Radius R₂
- 14: Erste Nocke
- 16: Zweite Nocke
- 20: Seilzughebel
- 22: Schwenkachse
- 24: Anbindung
- 26: Ausnehmung
- 30: Erster Vorsprung
- 32: Zweiter Vorsprung

- R₁: erster Radius
- R₂: Zweiter Radius
- R₃: Radius Ausnehmung
- A: Abstand der Vorsprünge 30, 32

- P: Parken
- N: Neutral
- D: Fahren
- R: Rückwärtsfahren
- S: Sport
- M: Manuell

## Patentansprüche

1. Wählhebelanordnung für ein Automatikgetriebe eines Kraftfahrzeuges mit einem um eine Hebelachse (6) schwenkbar in der Wählhebelanordnung (2) gelagerten Wählhebel (4), der in einer Schaltkulisse (8) der Wählhebelanordnung (2) geführt ist und mit dem verschiedene Schaltstufen (P, N, D, R, S, M) einschließlich einer Parkposition (P) anwählbar sind, einer Wählhebelpositionserfassungseinrichtung (10) und mit einem Seilzughebel (20), an dem ein mit dem Getriebe verbindbarer Seilzug festlegbar ist, **dadurch gekennzeichnet, dass** auf der Hebelachse (6) in drehfester Verbindung mit dem Wählhebel (4) eine Kurvenscheibe (12) mit wenigstens einer an ihrem Umfang ausgebildeten Nocke (14) angeordnet ist, wobei der Seilzughebel (20) die Kurvenscheibe (12) zumindest abschnittsweise umgreift und wenigstens einen Vorsprung (30) aufweist, der von der Nocke (14) der Kurvenscheibe (12) beim Betätigen des Wählhebels (4) in die Parkposition (P) mitnehmbar ist derart, dass der Seilzughebel (20) von einer Fahrposition (R, N, D, S, M) in eine Parkposition (P) betätigt wird, wobei die Kurvenscheibe (12) eine zweite Nocke (16) und der Seilzughebel (20) einen zweiten Vorsprung (32) aufweisen, wobei der zweite Vorsprung (32) von der zweiten Nocke (16) beim Betätigen des Wählhebels (4) aus der Parkposition (P) mitnehmbar ist derart, dass der Seilzughebel (20) von der Parkposition (P) in die Fahrposition (R, N, D, S, M) betätigt wird.

2. Wählhebelanordnung nach Anspruch 1, **dadurch gekennzeichnet, dass** der Seilzughebel (20) um eine Schwenkachse (22) schwenkbar an der Wählhebelanordnung (2) angeordnet ist.

3. Wählhebelanordnung nach einem der vorangegangenen Ansprüche, **dadurch gekennzeichnet, dass** der Seilzughebel (20) die Kurvenscheibe (12) mit einer Ausnehmung (26) ringartig umgreift.

4. Wählhebelanordnung nach Anspruch 3, **dadurch gekennzeichnet, dass** der erste Vorsprung (30) und/oder der zweite Vorsprung (32) des Seilzughebels (20) als Innenkontur der Ausnehmung (26) ausgebildet sind.

5. Wählhebelanordnung nach Anspruch 1, **dadurch gekennzeichnet, dass** der Seilzughebel (20) an der Wählhebelanordnung (2) in einer Linearführung oder in einer Kurvenführung geführt ist.

6. Wählhebelanordnung nach Anspruch 5, **dadurch gekennzeichnet, dass** der Seilzughebel (20) einen gabelartigen Abschnitt aufweist, an dem der erste Vorsprung und/oder der zweite Vorsprung ausgebildet sind.

7. Wählhebelanordnung nach einem der vorhergehenden Ansprüche, **dadurch gekennzeichnet, dass** die Kurvenscheibe (12) eine derartige Kontur aufweist, dass der oder die Vorsprünge (30, 32) des Seilzughebels (20) in sämtlichen möglichen Stellungen des Wählhebels (4) an der Kurvenscheibe (12) anliegen.

8. Wählhebelanordnung nach Anspruch 7, **dadurch gekennzeichnet, dass** die Kurvenscheibe (12) in einem Bereich in Betätigungsrichtung zu der Parkposition (P) des Seilzughebels (20) vor dem ersten Nocken (14) zum Betätigen des Seilzughebels (20) in die Parkposition (P) einen im wesentlichen konstanten Radius (R₁) aufweist und dass die Kurvenscheibe (12) in einem Bereich hinter dem zweiten Nocken (16) zum Betätigen des Seilzughebels (20) aus der Parkposition (P) heraus einen im wesentlichen konstanten zweiten Radius (R₂) aufweist, der größer ist als der erste Radius (R₁).

9. Wählhebelanordnung nach einem der vorangegangenen Ansprüche, **dadurch gekennzeichnet, dass** beiderseits der Hebelachse (6) eine Kurvenscheibe (12) angeordnet ist.

## Claims

1. Selector lever arrangement for an automatic transmission of a motor vehicle, comprising a selector lever (4) which is mounted in the selector lever arrangement (2) to be pivotable about a lever axis (6) and is guided in a gear shift gate (8) of the selector lever arrangement (2) and by which different shift stages (P, N, D, R, S, M) inclusive of a park position (P) are selectable, a selector lever position detecting device (10), and a cable pull lever (20) to which a cable pull, which is connectible with the transmission, is fixable, **characterised in that** a cam disc (12) with at least one lobe (14) formed at the circumference thereof is arranged on the lever axis (6) in rotationally fixed connection with the selector lever (4), wherein the cable pull lever (20) engages at least sectionally around the cam disc (12) and has at least one projection (30) which is so entrainable by the lobe (14) of the cam disc (12) on actuation of the selector lever (4) into the park position (P) that the cable pull lever (20) is actuated from a drive position (R, N, D, S, M) into a park position (P), wherein the cam disc (12) has a second lobe (16) and the cable pull lever (20) a second projection (32), wherein the second projection (32) is so entrainable by the second lobe (16) on actuation of the selector lever (4) from the park position (P) that the cable pull lever (20) is actuated from the park position (P) into the drive position (R, N, D, S, M).

2. Selector lever arrangement according to claim 1, **characterised in that** the cable pull lever (20) is arranged at the selector lever arrangement (2) to be pivotable about a pivot axis (22).

3. Selector lever arrangement according to one of the preceding claims, **characterised in that** the cable pull lever (20) engages annularly around the cam disc (12) by a recess (26).

4. Selector lever arrangement according to claim 3, **characterised in that** the first projection (30) and/or the second projection (32) of the cable pull lever (20) is or are formed as an inner profile of the recess (26).

5. Selector lever arrangement according to claim 1, **characterised in that** the cable pull lever (20) is guided at the selector lever arrangement (2) in a linear guide or in a curved guide.

6. Selector lever arrangement according to claim 5, **characterised in that** the cable pull arrangement (20) has a fork-like section at which the first projection and/or the second projection is or are formed.

7. Selector lever arrangement according to any one of the preceding claims, **characterised in that** the cam disc (12) has such a profile that the projection or projections (30, 32) of the cable pull lever (20) bears or bear against the cam disc (12) in all possible settings of the selector lever (4).

8. Selector lever arrangement according to claim 7, **characterised in that** the cam disc (12) has in a region in actuation direction towards the park position (P) of the cable pull lever (20) in front of the first lobe (14) for actuation of the cable pull lever (20) into the park position (P) a substantially constant radius (R₁) and that the cam disc (12) has in a region behind the second lobe (16) for actuation of the cable pull lever (20) out of the park position (P) a substantially constant second radius (R₂) greater than the first radius (R₁).

9. Selector lever arrangement according to any one of the preceding claims, **characterised in that** a cam disc (12) is arranged on either side of the lever axis (6).

## Revendications

1. Agencement de levier de sélection pour une boîte de vitesses automatique d'un véhicule automobile comprenant un levier de sélection (4) monté dans l'agencement de levier de sélection (2) de manière à pouvoir pivoter autour d'un axe de levier (6), qui est guidé dans une coulisse de changement de vitesse (8) de l'agencement de levier de sélection (2) et avec lequel divers rapports de changement de vitesse (P, N, D, R, S, M) y compris une position de stationnement (P) peuvent être sélectionnés, un dispositif de détection de la position du levier de sélection (10) et un levier à câble Bowden (20), sur lequel peut être fixé un câble Bowden pouvant être connecté à la boîte de vitesses, **caractérisé en ce que** qu'un disque à came (12) avec au moins une came (14) réalisée sur sa périphérie est disposé sur l'axe de levier (6) en liaison solidaire en rotation avec le levier de sélection (4), le levier à câble Bowden (20) venant en prise au moins en partie avec le disque à came (12) et présentant au moins une saillie (30), qui peut être entraînée par la came (14) du disque à came (12) lors de l'actionnement du levier de sélection (4) dans la position de stationnement (P), de telle sorte que le levier à câble Bowden (20) soit actionné d'une position de conduite (R, N, D, S, M) dans une position de stationnement (P), le disque à came (12) présentant une deuxième came (16) et le levier à câble Bowden (20) présentant une deuxième saillie (32), la deuxième saillie (32) pouvant être entraînée par la deuxième came (16) lors de l'actionnement du levier de sélection (4) hors de la position de stationnement (P), de telle sorte que le levier à câble Bowden (20) soit actionné de la position de stationnement (P) dans la position de conduite (R, N, D, S, M).

2. Agencement de levier de sélection selon la revendication 1, **caractérisé en ce que** le levier à câble Bowden (20) est disposé sur l'agencement de levier de sélection (2) de manière à pouvoir pivoter autour d'un axe de pivotement (22).

3. Agencement de levier de sélection selon l'une quelconque des revendications précédentes, **caractérisé en ce que** le levier à câble Bowden (20) vient en prise de manière annulaire autour du disque à came (12) avec un évidement (26).

4. Agencement de levier de sélection selon la revendication 3, **caractérisé en ce que** la première saillie (30) et/ou la deuxième saillie (32) du levier à câble Bowden (20) sont réalisées sous forme de contour interne de l'évidement (26).

5. Agencement de levier de sélection selon la revendication 1, **caractérisé en ce que** le levier à câble Bowden (20) est guidé sur l'agencement de levier de sélection (2) dans un guide linéaire ou dans un guide courbe.

6. Agencement de levier de sélection selon la revendication 5, **caractérisé en ce que** le levier à câble Bowden (20) présente une portion en forme de fourche, sur laquelle sont réalisées la première et/ou la deuxième saillie.

7. Agencement de levier de sélection selon l'une quelconque des revendications précédentes, **caractérisé en ce que** le disque à came (12) présente un contour tel que la ou les saillies (30, 32) du levier à câble Bowden (20) s'appliquent dans toutes les positions possibles du levier de sélection (4) contre le disque à came (12).

8. Agencement de levier de sélection selon la revendication 7, **caractérisé en ce que** le disque à came (12) présente, dans une région dans le sens d'actionnement vers la position de stationnement (P) du levier à câble Bowden (20) avant la première came (14) pour l'actionnement du levier à câble Bowden (20) dans la position de stationnement (P), un rayon (R₁) essentiellement constant et **en ce que** le disque à came (12) présente, dans une région derrière la deuxième came (16) pour l'actionnement du levier à câble Bowden (20) hors de la position de stationnement (P), un deuxième rayon (R₂) essentiellement constant, qui est plus grand que le premier rayon (R₁).

9. Agencement de levier de sélection selon l'une quelconque des revendications précédentes, **caractérisé en ce qu'**un disque à came (12) est disposé de chaque côté de l'axe de levier (6).
